(19) Europäisches Patentamt
European Patent Office
Office européen des brevets

(11) **EP 2 184 597 A1**

(12) **DEMANDE DE BREVET EUROPEEN**

(43) Date de publication:
**12.05.2010 Bulletin 2010/19**

(51) Int Cl.:
*G01M 15/11* (2006.01)   *F02D 41/14* (2006.01)

(21) Numéro de dépôt: **09290728.6**

(22) Date de dépôt: **25.09.2009**

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**
Etats d'extension désignés:
**AL BA RS**

(30) Priorité: **06.11.2008 FR 0806206**

(71) Demandeur: **IFP**
**92852 Rueil-Malmaison Cédex (FR)**

(72) Inventeurs:
• **Duval, Laurent**
**92000 Nanterre (FR)**
• **Zaccardi, Jean-Marc**
**74600 Seynod (FR)**

(54) **Procédé de contrôle de la combustion d'un moteur fonctionnant en mode stratifié**

(57) - Procédé de contrôle de la combustion d'un moteur à combustion interne fonctionnant en mode stratifié.
- Pour chaque cycle moteur, on détermine un paramètre caractérisant une distribution de N valeurs d'indicateurs de la stabilité de la combustion, la PMI par exemple, acquises sur N cycles précédant le cycle en cours, en s'affranchissant des valeurs extrêmes. A partir de ce paramètre, on définit un seuil pour l'indicateur de stabilité. On détecte alors une instabilité de combustion au cours d'un cycle en comparant l'indicateur de la combustion avec ce seuil, et on contrôle le déroulement de la combustion instable dans la chambre de combustion.

**Fig. 3**

EP 2 184 597 A1

**Description**

La présente invention concerne le domaine du contrôle de la combustion d'un moteur à combustion interne. Elle concerne plus particulièrement une telle méthode appliquée à un moteur à allumage commandé fonctionnant en mode stratifié.

Les émissions polluantes des moteurs à allumage commandé classiques fonctionnant en mode homogène stoechiométrique sont relativement bien traitées par des systèmes simples et peu coûteux. La consommation de ces moteurs reste néanmoins supérieure à celle des moteurs Diesel par exemple, notamment à faible charge à cause des pertes par pompage.

Un autre mode de fonctionnement, dit « stratifié » a pour objectif d'améliorer le rendement du moteur à allumage commandé lorsqu'il fonctionne sous faible charge. Il consiste à admettre un mélange globalement pauvre dans la chambre de combustion, c'est à dire un mélange avec un excès d'air. Cette dilution du mélange carburé s'opère en ouvrant complètement le papillon des gaz et en régulant le couple du moteur (i.e. la charge) en jouant uniquement sur la quantité de carburant injectée. Le fait de fonctionner avec un papillon ouvert au maximum permet de supprimer, ou tout du moins de fortement limiter les pertes par pompage du moteur (pour rappel, ces pertes traduisent la nécessité d'apporter du travail au moteur pour vidanger la chambre de combustion après la combustion en poussant les gaz brûlés mais aussi pour admettre des gaz frais lors de l'admission).

Toutefois, ce mélange pauvre ne doit pas être réalisé de manière homogène, car un mélange trop pauvre homogène arriverait rapidement aux limites d'inflammabilité du carburant. Il serait alors impossible d'allumer le mélange à l'aide d'une bougie. C'est pourquoi, on cherche volontairement à localiser le carburant aux abords de la bougie d'allumage pour créer ainsi une poche de mélange ayant une richesse propice à un allumage, alors qu'à l'échelle de la chambre, le mélange reste globalement très pauvre. C'est cette stratification de richesse qui permet de fonctionner avec des richesses basses inatteignables avec un mélange homogène (jusqu'à 0.2 de richesse).

Cette stratification peut être obtenue par trois types de systèmes

• "jet guided" ou "spray guided" : le carburant est amené aux abords de la bougie directement grâce aux jets de l'injecteur ;

• "air guided" : dans ce cas, le carburant n'est pas injecté directement a proximité de la bougie, mais il y est emmené par le mouvement d'air dans la chambre ;

• "wall guided" : dans ce cas, le carburant est injecté sur le piston qui le renvoie vers la bougie en remontant pendant la phase de compression.

Il s'agit toujours d'un allumage commandé par une bougie mais dans des conditions totalement différentes qui permettent :

• d'améliorer le rendement thermodynamique théorique : le fonctionnement en mélange pauvre permet en effet de jouer sur la capacité calorifique du mélange

• d'améliorer le rendement de cycle

■ ar les échanges thermiques sont limités du fait de la dilution par de l'air ou par une recirculation de gaz brûlés ;

■ et car les pertes par pompage sont elles aussi clairement réduites du fait de l'ouverture du papillon d'admission.

La problématique principale associée à ce mode de combustion concerne le traitement des gaz d'échappement. Le fait de ne pas fonctionner à richesse 1 déséquilibre les émissions polluantes et complexifie le système de post traitement, en particulier en ce qui concerne les émissions d'oxydes d'azote particulièrement élevées en mélange pauvre. La formation de NOx dépend en effet au premier ordre de la température maximale atteinte au cours de la combustion et de la richesse (plus on est haut en température et pauvre, et plus les émissions de NOx risquent d'être importantes).

En guise d'exemple, le dernier véhicule Mercedes (marque déposée) mis en circulation avec un moteur à fonctionnement stratifié utilise :

• un catalyseur trois voies : système de post traitement classique pour un moteur à allumage commandé permettant de traiter les HC, le CO et les NOx par oxydoréduction pour les phases de fonctionnement à richesse = 1 ;
• mais aussi un piège à NOx dédié spécifiquement au traitement des émissions de NOx pendant les phases de fonctionnement stratifiée (richesse < 1).

Les caractéristiques de ce type de système et son contrôle sont très complexes et il est souvent nécessaire d'agir simultanément à la source pour limiter les émissions de NOx. Pour cela, on utilise de l'EGR (Exhaust Gas Recirculation). On fait donc recirculer dans la chambre de combustion des gaz brûlés issus des cycles précédents. Cette dilution supplémentaire permet de limiter la température maximale atteinte dans la chambre au cours de la combustion, et de limiter ainsi la formation des NOx.

Malheureusement, la combustion peut être déstabilisée lorsque la stratification de richesse est mal contrôlée et lorsque la dilution supplémentaire à l'EGR devient excessive. Des combustions incomplètes peuvent avoir lieu et des ratés d'allumage peuvent même se produire. Ces combustions dégradées ou inexistantes sont très préjudiciables en termes d'émissions polluantes mais aussi en termes de ressenti par le conducteur.

Il est donc nécessaire de contrôler la stabilité de fonctionnement en stratifié.

**État de la technique**

Sur un moteur à fonctionnement stratifié, les réglages sont beaucoup plus compliqués que lors d'un fonctionnement classique avec un mélange homogène stoechiométrique. Il y a en effet un compromis à trouver entre la consommation, les émissions d'oxyde d'azote et la stabilité de fonctionnement. C'est pourquoi on réalise généralement des études de "robustesse" des réglages, pendant lesquelles on fait varier les phasages d'injection et d'allumage, et on cartographie ainsi les prestations moteur pour choisir au final le meilleur compromis.

Sur véhicule, on utilise donc a priori ces réglages nominaux que l'on corrige ensuite surtout en fonction de la thermique moteur, qui a un impact significatif sur la stabilité de combustion au travers de la température des parois, de la température d'air etc.

Ainsi l'objet de l'invention concerne un procédé alternatif permettant de contrôler la combustion dans les moteurs à allumage commandé fonctionnant en mode stratifié. La méthode s'appuie sur une caractérisation de valeurs d'indicateurs de stabilité de la combustion, la PMI par exemple, tout en s'affranchissant des cycles pour lesquels une instabilité se produit.

**Le procédé selon l'invention**

L'invention concerne un procédé de contrôle de la combustion d'un moteur à combustion interne à allumage commandé fonctionnant en mode stratifié, dans lequel on détecte une instabilité de combustion dans une chambre de combustion (14) d'au moins un cylindre (12) dudit moteur, dans lequel on enregistre un signal représentatif d'un état de la combustion au moyen d'un capteur placé dans le moteur, et on déduit dudit signal au moins un indicateur de la stabilité de la combustion à chaque cycle moteur. Le procédé comporte, pour chaque cycle moteur, les étapes suivantes :

- on détermine au moins un paramètre caractérisant une distribution de N valeurs d'indicateurs de la stabilité de la combustion acquises sur N cycles précédant le cycle en cours, en s'affranchissant, parmi lesdites N valeurs, de valeurs extrêmes ;

- on définit au moins un seuil pour ledit indicateur au moyen desdits paramètres caractérisant ladite distribution ;

- on détecte une instabilité de la combustion à chaque cycle en comparant l'indicateur de la combustion avec ledit seuil, puis on détermine une fréquence d'apparition d'instabilité au cours de plusieurs cycles, et l'on contrôle le déroulement de la combustion lorsque ladite fréquence est supérieure à un seuil donné.

Le signal utilisé peut être une mesure continue de pression au sein du cylindre, et l'indicateur peut être choisi parmi les indicateurs suivants : la pression moyenne indiquée, l'angle CA10 (l'angle vilebrequin pour lequel dix pour cent du carburant est consommé lors de la combustion), la pression cylindre maximale, le couple et les régimes instantanés, et le dégagement d'énergie.

Selon un mode de réalisation, on détermine le paramètre caractérisant la distribution au moyen d'un estimateur robuste. On peut choisir cet estimateur robuste parmi l'un des estimateurs robustes suivants : la moyenne réduite, la médiane, un estimateur m issu d'une minimisation de la fonction f suivante :

$$f(V,m) = (|V(1) - m|)^a + ... + (|V(N) - m|)^a,$$

où a est un nombre réel compris entre 0 et 2, et V(1).... V(N) sont les N valeurs d'indicateurs de la combustion.

Selon un autre mode de réalisation, on peut déterminer le paramètre caractérisant la distribution à partir d'une modélisation de la distribution, en appliquant les étapes suivantes :

a- on retire X valeurs d'indicateurs parmi les N valeurs de la distribution à modéliser ;

b- on modélise la distribution des valeurs d'indicateurs restantes, en choisissant une loi de distribution expérimentale a priori ;

c- on calcule un critère de qualité de la modélisation ;

d- si ledit critère indique une qualité de modélisation insuffisant, on retire encore des valeurs d'indicateur, parmi les N-X valeurs restantes, et on réitère à l'étape b.

Selon ce mode de réalisation, le critère de qualité de la modélisation peut correspondre à une somme d'écarts quadratiques entre la distribution expérimentale a priori et la distribution modélisée, ou à une somme d'écarts absolus entre la distribution expérimentale a priori et la distribution modélisée.

Selon l'invention, on peut déterminer le seuil en définissant une tolérance sur le paramètre caractérisant la distribution. Ce seuil peut ainsi correspondre à une somme de la moyenne réduite des N valeurs d'indicateurs et de k fois l'écart type desdites N valeurs, k étant un réel positif ou négatif.

Enfin, on peut également déterminer plusieurs indicateurs de la combustion, et pour chacun d'eux on détermine au moins un seuil.

## Présentation des figures

Les autres caractéristiques et avantages de l'invention apparaîtront à la lecture de la description donnée ci-après en se référant aux graphiques annexés où :

- la figure 1 montre un moteur utilisant la méthode de détection selon l'invention.

- la figure 2 illustre une répartition de valeurs de PMI en fonction du cycle (CY), ainsi que la moyenne et l'écart type calculés au moyen de statistiques classiques.

- la figure 3 illustre une répartition de valeurs de PMI en fonction du cycle (CY), ainsi que la moyenne et l'écart type calculés au moyen de statistiques robustes.

- les figures 4A à 4C représentent l'évolution de la distribution (densité D) expérimentale sur 1000 cycles, des valeurs de PMI obtenues sur un même point de fonctionnement à 2000 tr/min, mais avec des taux d'EGR différents.

## Description détaillée du procédé

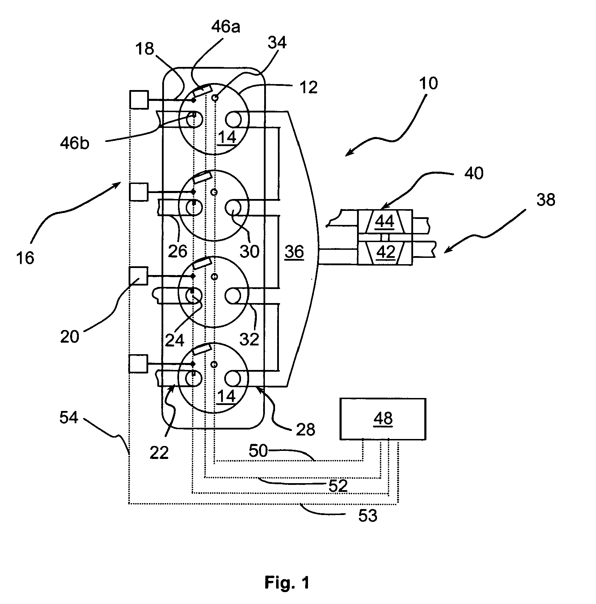

Sur la figure 1, un moteur à combustion interne 10 à allumage commandé, en particulier de type essence, comprend au moins un cylindre 12 avec une chambre de combustion 14 à l'intérieur de laquelle se produit la combustion d'un mélange d'air et de carburant.

Le cylindre comprend au moins un moyen d'alimentation en carburant sous pression 16, par exemple sous la forme d'un injecteur de carburant 18 contrôlé par une vanne 20, qui débouche dans la chambre de combustion, au moins un moyen d'admission d'air 22 avec une soupape 24 associée à une tubulure d'admission 26 se terminant par un plénum 26b (non représenté sur la figure 1), au moins un moyen d'échappement des gaz brûlés 28 avec une soupape 30 et une tubulure d'échappement 32 et au moins un moyen d'allumage 34, comme une bougie, qui permet de générer une ou plusieurs étincelles permettant d'enflammer le mélange carburé présent dans la chambre de combustion.

Ce moteur présente la particularité de pouvoir fonctionner en mode "stratifié". Cette stratification du mélange d'air et de carburant peut être classiquement obtenue par trois méthodes principales. La première consiste à positionner le moyen d'alimentation en carburant (l'injecteur 18) à proximité du moyen d'allumage 34 pour que le mélange carburé inflammable arrive naturellement aux abords du moyen d'allumage 34 au moment de l'allumage. Cette première solution est généralement qualifiée de *"spray guided"*. La seconde solution consiste à maintenir la stratification du mélange grâce aux mouvements d'air créés dans la chambre de combustion 14 par l'air entrant par les tubulures d'admission 26. Cette aérodynamique interne est ensuite aussi utilisée pour guider le carburant jusqu'au moyen d'allumage 34. Cette seconde solution est généralement qualifiée de *"air guided".* La troisième méthode consiste à utiliser les parois de la chambre de combustion 14 et du piston pour guider le carburant jusqu'au moyen d'allumage 34. Cette troisième solution est généralement qualifiée de *"wall guided".*

Les tubulures 32 des moyens d'échappement 28 de ce moteur sont raccordées à un collecteur d'échappement 36 lui-même connecté à une ligne d'échappement 38. Ce type de fonctionnement "stratifié" peut être mis en oeuvre à la fois sur les moteurs dits "atmosphériques" et sur les moteurs suralimentés. C'est pourquoi, dans le cadre de cet exemple de la figure 1, un dispositif de suralimentation 40, par exemple un turbocompresseur, est placé sur cette ligne d'échappement et comprend un étage d'entraînement 42 avec une turbine balayée par les gaz d'échappement circulant dans la ligne d'échappement et un étage de compression 44 qui permet de faire admettre un air d'admission sous pression dans les chambres de combustion 14 par les tubulures d'admission 26.

Le moteur comprend des moyens 46a de mesure de la pression cylindre, disposés au sein même du cylindre 12 du moteur. Ces moyens de mesure sont généralement constitués par un capteur de pression qui permet de générer un signal représentatif de l'évolution de la pression dans un cylindre.

Le moteur peut aussi comprendre des moyens 46b de mesure de la pression d'admission, disposés dans le plénum 26b. Ces moyens de mesure sont généralement constitués par un capteur de pression absolue, de type piézoélectrique, qui permet de générer un signal représentatif de l'évolution de la pression d'admission dans le plénum d'admission.

Le moteur comprend également une unité de calcul et de commande 48, dénommée calculateur moteur, qui est reliée par des conducteurs (pour certains bidirectionnels) aux différents organes et capteurs du moteur de façon à pouvoir recevoir les différents signaux émis par ces capteurs, comme la température de l'eau ou la température de l'huile, pour les traiter par calcul et ensuite commander les organes de ce moteur pour assurer son bon fonctionnement.

Ainsi, dans le cas de l'exemple montré à la figure 1, les bougies 34 sont reliées par des conducteurs 50 au calculateur moteur 48 de façon à commander le moment de l'allumage du mélange carburé, le capteur de pression cylindre 46a est connecté par une ligne 52 à ce même calculateur moteur pour lui envoyer les signaux représentatifs de l'évolution de la pression dans le cylindre, et les vannes 20 de commande des injecteurs 18, sont raccordées par des conducteurs 54 au calculateur 48 pour commander l'injection de carburant dans les chambres de combustion. Les moyens 46b sont également connectés par une ligne 53 au calculateur moteur 48.

Le procédé selon l'invention permet de contrôler la combustion dans les moteurs à allumage commandé fonctionnant en mode stratifié. Le fonctionnement en mode stratifié présente un risque important d'instabilité de combustion selon les réglages utilisés. On entend par instabilité de combustion deux types d'instabilité :

1. les instabilités dues déroulement de la combustion : il s'agit d'instabilités qui apparaissent lorsque l'allumage est correctement initié, mais la combustion n'est pas complète.
2. les instabilités d'allumage : il s'agit des instabilités dues à une mauvaise initiation de la combustion l'allumage. Ces instabilités provoquent l'apparition de "ratés d'allumage".

À l'heure actuelle sur les véhicules de série, ce risque d'instabilité de combustion est maîtrisé en définissant des réglages d'injection et d'allumage, qui permettent d'atteindre une combustion stable dans des conditions de fonctionnement de référence. Des corrections cartographiées sont ensuite apportées en fonction, par exemple, de l'état thermique du moteur.

L'invention concerne un procédé de contrôle bouclé de la combustion en intégrant une phase de détection du manque de stabilité de la combustion en mode stratifié, une phase de traitement, et une phase d'action corrective.

Selon un exemple de réalisation, le procédé est un procédé temps réel, et il comporte les étapes suivantes :

1- on mesure la pression dans le cylindre (ou toute autre grandeur représentative de l'état d'avancement de la combustion grâce par exemple à un capteur accélérométrique ou à une sonde d'ionisation), et on en déduit un indicateur de stabilité de la combustion à chaque cycle moteur (PMI, CA10, dégagement d'énergie...) ;

Puis, pour chaque cycle :

2- on détermine des paramètres caractérisant la distribution de N valeurs d'indicateur acquises sur les N cycles précédents le cycle en cours, en s'affranchissant de certaines valeurs dites extrêmes ;

3- on définit un seuil caractérisant une combustion stable (combustion complète et sans raté d'allumage) au moyen des paramètres caractérisant la distribution, et on détecte une combustion instable (combustion incomplète ou raté d'allumage) en comparant l'indicateur de la combustion calculé au cycle en cours avec le seuil ;

4- on contrôle le déroulement de la combustion dégradée détectée dans la chambre de combustion.

1. Détermination d'indicateur de la stabilité de la combustion à chaque cycle

On enregistre un signal représentatif de l'état de la combustion, au moyen d'un capteur placé dans le moteur.

Selon un mode de réalisation on choisit la pression cylindre. La mesure de la pression cylindre est réalisée à partir des moyens 46a de mesure de la pression cylindre. L'instrumentation des cylindres pour une mesure de pression est de plus en courante sur les véhicules. Cependant, on peut s'affranchir d'une mesure de pression cylindre. Il est en effet possible d'utiliser indépendamment (ou en les couplant) des capteurs plus classiques permettant de mesurer un régime instantané, un couple instantané, un niveau de vibrations (capteur accélérométrique) ou encore un courant d'ionisation (par une sonde d'ionisation ou une simple bougie).

Puis, au cours de chaque cycle, on calcule un indicateur de la stabilité de la combustion, à partir de ce signal. Il peut s'agir par exemple des indicateurs suivants : PMI, CA10, dégagement d'énergie. Selon un mode de réalisation on choisit la PMI. La PMI correspond à la pression moyenne indiquée. On peut également détecter un manque de stabilité en couplant plusieurs informations, comme une mesure de pression dans la chambre de combustion, une mesure de régime instantané, une mesure de couple instantané, un signal issu d'un capteur accélérométrique, une signal d'ionisation, ...

2. Caractérisation d'une combustion instable à partir des indicateurs

La caractérisation d'une combustion stable, c'est-à-dire une combustion complète (non dégradée) et sans raté d'allumage, est réalisée en ligne à partir de N valeurs de PMI calculées sur les N-1 cycles précédent et le cycle en cours.

Deux problèmes sont à surmonter pour réaliser cette caractérisation :

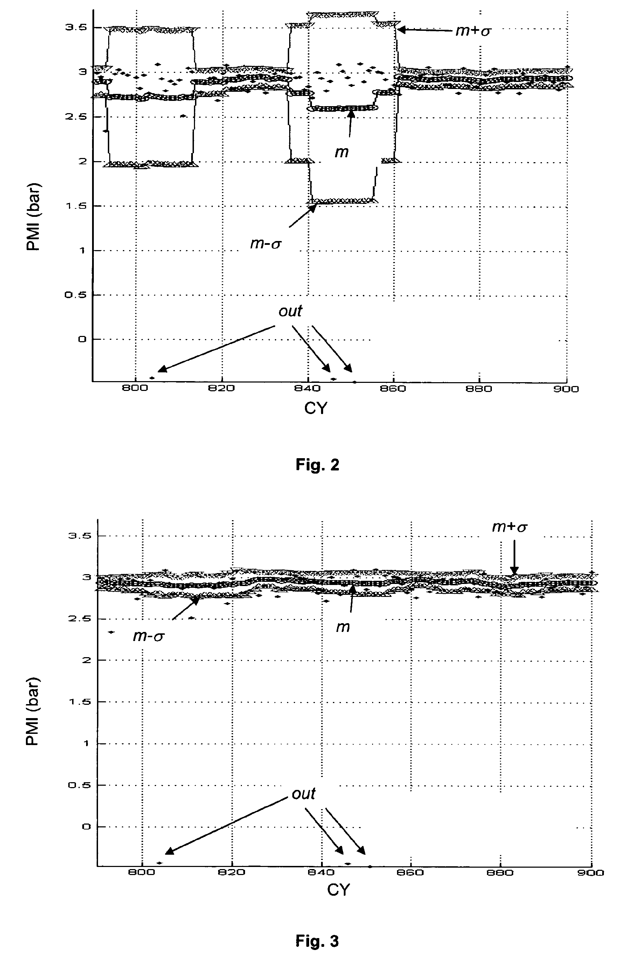

1- certaines valeurs de PMI ont été obtenues au cours de cycle pour lesquels une combustion dégradée a eu lieu. Ces valeurs ne sont donc pas caractéristiques d'une combustion normale. Ces valeurs de PMI obtenues au cours de cycles pour lesquels une combustion dégradée a lieu, sont appelées « outliers » ou « valeurs extrêmes ». Il s'agit de valeurs qui s'écartent exagérément de l'ensemble des autres observations du groupe de données auquel elles appartiennent. La figure 2 illustre une répartition de valeurs de PMI en fonction du cycle (CY). Les losanges noirs indiquent des mesures de PMI. La courbe du bas ($m$-$\sigma$) indique la courbe de la moyenne ($m$) moins l'écart type, et la courbe du haut ($m$+$\sigma$) indique la courbe de la moyenne ($m$) plus l'écart type. On s'aperçoit que les valeurs extrêmes (par exemple celles notées *out* sur la figure), affectent considérablement ces courbes.

2- la nécessité de contrôler rapidement la combustion, implique un nombre restreint de cycles (valeur de N faible, typiquement de l'ordre de dix), et donc peu de valeurs de PMI pour caractériser une combustion normale. De ce fait, les valeurs de PMI obtenues au cours de cycles pour lesquels une combustion dégradée a eu lieu sont d'autant plus influentes, et ne permettent pas d'obtenir une caractérisation suffisante pour détecter ultérieurement une combustion dégradée.

Selon un mode de réalisation, on caractérise une combustion stable, c'est-à-dire non dégradée, en déterminant un ou plusieurs paramètres caractéristiques de la distribution des N valeurs de PMI calculées sur les N-1 cycles précédent et le cycle en cours, en s'affranchissant des valeurs dites « extrêmes ».

Ces paramètres sont déterminés au moyen d'un estimateur robuste. Un estimateur robuste se distingue d'un estimateur non robuste en ce qu'il n'est pas fortement affecté par la présence, dans les mesures acquises, d'une certaine quantité de valeurs extrêmes. De tels estimateurs sont par exemple décrits dans le document suivant :

G., SAPORTA, 1990, « Probabilité analyse des données et statistique », Editions Technip, p. 311 - 313

On peut par exemple choisir l'un des estimateurs suivants :

- La moyenne réduite : on calcule la moyenne sur les mesures dont on a écarté x % des plus hautes et x % des plus basses.

- La médiane : on classe les mesures de la plus basse à la plus haute, et la médiane est la valeur supérieure à la moitié des mesures, et inférieure à l'autre moitié.

- Une classe spécifique d'estimateurs robustes s'obtient en minimisant une fonction coût particulière, définie à partir des mesures. La médiane est par exemple l'estimateur de ce type qui minimise la somme des écarts absolus aux mesures. Mais d'autres fonctions peuvent être utilisées.

De façon générale, pour calculer ces estimateurs robustes, on minimise une fonction $f$ qui est définie à partir des N valeurs de PMI, notées V(1).... V(N), et de l'estimateur que l'on recherche. La minimisation de cette fonction conduit à la valeur de l'estimateur robuste. On peut par exemple calculer l'estimateur robuste m qui minimise la fonction $f$ suivante :

$$f(V,m) = (|V(1) - m|)^a + ... + (|V(N) - m|)^a,$$

où a est un nombre réel compris entre 0 et 2.

Ces paramètres (estimateurs robustes) sont insensibles aux valeurs extrêmes. Selon ce mode de réalisation, on peut détecter une combustion instable soit sur un point de fonctionnement stabilisé soit lors d'un fonctionnement transitoire.

La figure 3 illustre le résultat de la méthode, à partir des données de la figure 2.

Selon un autre mode de réalisation, ces paramètres sont déterminés au moyen d'une modélisation de la distribution des N valeurs de PMI, par un processus itératif.

La dispersion cycle à cycle de la combustion est généralement représentée par une loi normale à laquelle on associe une moyenne, qui sert de référence pour caractériser le comportement du moteur, et un écart type qui sert classiquement à quantifier la stabilité de la grandeur observée. Or, il s'avère que l'écart type classique n'est pas toujours représentatif de la stabilité, et que la modélisation de la dispersion cyclique par une loi normale n'est pas optimale dans certaines conditions. Cette instabilité de combustion peut être directement ressentie par l'utilisateur au travers par exemple de ratés d'allumage (problématique de l'agrément de conduite mais aussi des émissions polluantes).

La méthode de modélisation de la distribution selon l'invention, permet de fournir des informations plus pertinentes qu'un couple "moyenne / écart type" calculé au sens de la loi normale. Ceci est important pour détecter une combustion instable.

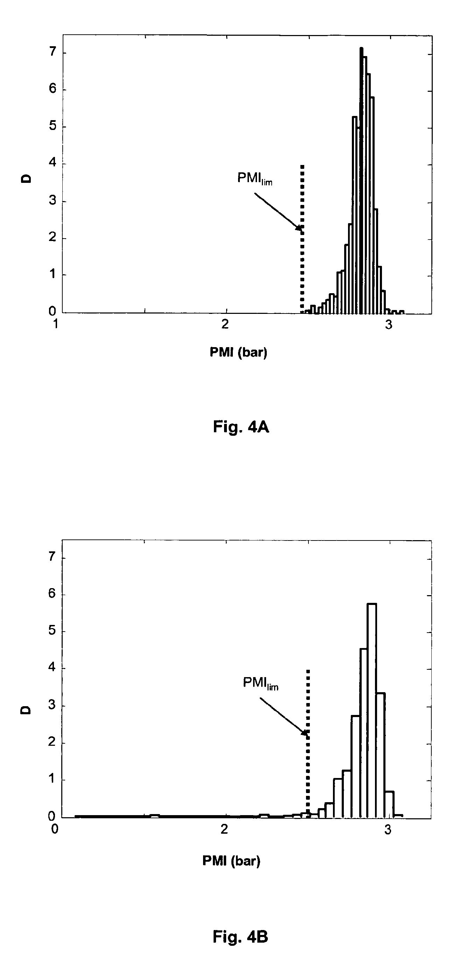

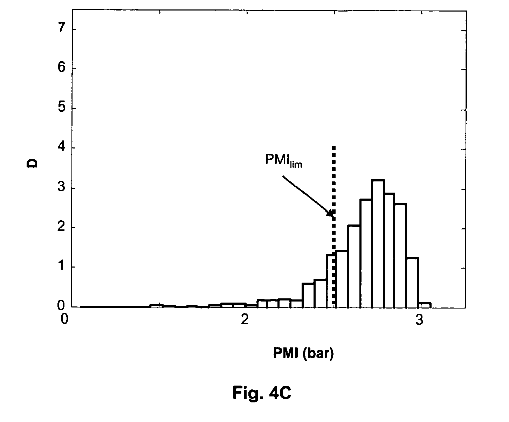

Les figures 4A à 4C représentent l'évolution de la distribution (densité $D$) expérimentale sur 1000 cycles des valeurs de PMI obtenues sur un même point de fonctionnement à 2000 tr/min, mais avec des taux d'EGR différents : 10% (figure 4A), 20% (figure 4B) et 30% (figure 4C). L'ajout d'EGR se traduit par une déstabilisation de la combustion (combustions dégradées et ratés d'allumage), visible sur l'étirement de la queue de distribution orientée vers les faibles valeurs de PMI. En définissant un seuil de PMI, c'est-à-dire une valeur de PMI limite, en dessous de laquelle on considère que la combustion est instable, on peut déterminer la quantité (ou la fréquence) de cycle pour lesquels la combustion est instable. Par exemple, si l'on positionne le seuil de PMI ($PMI_{lim}$) à 2,5 bars, la figure 4A illustre qu'aucun cycle ne présente une PMI inférieure à ce seuil, il n'y a donc pas lieu d'agir pour un taux d'EGR de 10%. La figure 4B illustre que 2% des cycles présentent une PMI inférieure à ce seuil, il peut être nécessaire d'agir pour un taux d'EGR de 20%. Enfin, la figure 4C illustre que 6% des cycles présentent une PMI inférieure à ce seuil, il est certainement nécessaire d'agir pour un taux d'EGR de 30%.

Par conséquent, la modélisation effectuée (que ce soit sur la base d'une loi normale ou autre) est inévitablement faussée par cet étirement car celui-ci ne représente en rien une combustion normale.

La modélisation des combustions stables seules ne peut pas être réalisée à partir de l'échantillon complet de N cycles. Nous proposons donc une méthode automatique pour aboutir à la modélisation optimale des combustions normales. Cette démarche consiste à itérer sur le nombre d'échantillons pour trouver la modélisation optimale.

La méthode comporte alors les étapes suivantes

1. On retire $X$ valeurs de PMI, parmi les N valeurs de la distribution à modéliser. De façon préférentielle on retire les valeurs les plus faibles.

2. On modélise la distribution des valeurs de PMI restantes, en choisissant une loi à priori présentant une caractéristique d'asymétrie (loi gamma, « Generalized Extreme Values », Weibull, Nakagami, log-logistic, ...).

3. On calcule un critère de qualité de la modélisation.

4. Si le critère indique que la qualité n'est pas suffisante, on retire encore des valeurs de PMI, parmi les $N-X$ valeurs de PMI. De façon préférentielle on retire les valeurs les plus faibles. Puis on réitère le processus.

Le fait de retirer les $X$ cycles pour lesquels les valeurs de PMI sont faibles, revient à supprimer de l'échantillon des valeurs qui correspondent potentiellement à des combustions instables. Après quelques itérations, l'algorithme permet d'éliminer toutes les combustions instables et donc d'aboutir à un échantillon composé uniquement de combustions stables. Le seuil de détection entre les combustions stables et instables est donc fixé automatiquement par cet algorithme lorsque le critère de modélisation indique une modélisation optimale.

Parmi ces critères à minimiser, nous proposons d'utiliser par exemple la somme des écarts quadratiques entre la distribution expérimentale ($x_{i\_exp}$) et la distribution modélisée ($x_{i\_modélisés}$) :

$$I_2 = \sum \left( x_{i\_exp} - x_{i\_modélisés} \right)^2$$

ou la somme des écarts absolus entre les deux distributions :

$$I_3 = \sum \left| x_{i\_exp} - x_{i\_modélisés} \right| .$$

Puis, à partir de la loi de distribution des valeurs de PMI ainsi modélisée, on calcule un ou plusieurs paramètres caractéristiques de cette distribution. On peut par exemple utiliser les paramètres suivants : moyenne, médiane, facteur d'asymétrie, ou encore un facteur d'aplatissement.

3. Définition de seuils et détection de combustion instable

A partir de ces paramètres caractéristiques de la distribution d'une combustion stable, on définit des seuils. Ces seuils permettent de définir si une valeur de PMI donnée appartient ou non à la distribution des valeurs de PMI des N cycles précédents, sans tenir comptes des combustions instables.

On peut s'appuyer sur la moyenne m(N) et l'écart type robustes σ(N). Par exemple, on peut considérer que si une valeur de PMI est supérieure à deux fois l'écart type, alors cette valeur correspond à une combustion instable.

Ainsi, les seuils calculés sont dynamiques, car ils évoluent à chaque cycle. En effet, pour chaque cycle, on caractérise la distribution des valeurs de PMI des N cycles précédents, en s'affranchissant des valeurs extrêmes. Les paramètres servant à caractériser cette distribution servent alors à définir un seuil. Au cycle suivant, on caractérise à nouveau la distribution, et le seuil est donc modifié.

En somme, un seuil est défini à partir des paramètres caractérisant une distribution de valeurs de PMI obtenues lors de combustions stables, et d'une tolérance sur ces paramètres : moyenne robuste et tolérance liée à l'écart type par exemple.

Une fois les seuils définis, on calcule la PMI sur le cycle en cours et on le compare au seuil défini, de façon à détecter une combustion instable en comparant l'indicateur de stabilité (PMI) au seuil.

4- Contrôle de la combustion instable

La comparaison de l'indicateur de stabilité calculé au cycle en cours avec le seuil, permet donc de détecter une combustion instable (combustion incomplète ou raté d'allumage).

On peut donc évaluer, au cours des cycles, la fréquence des instabilités (englobant les instabilités de déroulement de combustion et les ratés d'allumage).

En fonction de la valeur de cette fréquence, on peut évaluer la criticité des instabilités. Par exemple, si la fréquence des instabilités est supérieure à 5 %, alors on estime que la combustion est trop instable et qu'il est nécessaire d'engager une action corrective. On peut aussi envisager des critères plus restrictifs à 3 ou 2 % au fur et à mesure que la charge diminue.

Le calculateur moteur peut donc déterminer si la stabilité de la combustion doit être améliorée. Ainsi, une action corrective est déclenchée par le calculateur moteur si l'amplitude et/ou la fréquence de l'indicateur de stabilité utilisé sort de la dispersion acceptable.

Cette action corrective peut se faire de plusieurs manières selon le point de fonctionnement du moteur et selon les actuateurs à disposition. Plusieurs actions peuvent être envisagées simultanément, par exemple sur le taux d'EGR, la stratégie d'injection (pression d'injection, nombre d'injections, phasage des injections, quantité injectée sur chaque injection, ...), la stratégie d'allumage (AVA, temps de charge, train d'étincelles, ...), les conditions de pression et de température à l'admission et à l'échappement, ou encore, sur les positions des VVT à l'admission et à l'échappement pour jouer sur le taux d'IGR.

Pour la modification de la pression d'admission, le moteur comprend également un papillon d'admission des gaz qui permet de contrôler le débit d'air frais entrant dans le moteur. Le moteur se comportant comme une pompe volumétrique, le vannage de l'admission se traduit par une dépression dans le plenum et dans les conduits. Le réglage de ce vannage permet d'adapter la pression d'admission aux conditions de fonctionnement. Dans le cas d'un moteur suralimenté, le pilotage de l'organe de suralimentation peut aussi permettre d'adapter la pression d'admission aux conditions de fonctionnement.

Pour la distribution (IGR), le moteur comprend également un ou plusieurs dispositifs de réglage de la distribution (levées variables et / ou calages variables) de manière à pouvoir faire évoluer le diagramme de distribution selon les conditions de fonctionnement. Ces dispositifs permettent notamment de faire évoluer le taux de gaz brûlés recirculés de manière interne au moteur (IGR - Internal Gas Recirculation) et d'agir ainsi sur la stabilité de combustion.

Enfin, pour le réglage du taux d'EGR, le moteur comprend également un ou plusieurs dispositifs de recirculation externe des gaz brûlés (EGR - Exhaust Gas Recirculation). Les gaz d'échappement peuvent être prélevés avant ou après les systèmes de post traitement, et avant ou après les éventuels systèmes de suralimentation. Ces dispositifs servent également à faire évoluer le taux de gaz brûlés réadmis dans le moteur et d'agir ainsi sur la stabilité de combustion.

Un exemple de réalisation de l'invention a été décrit dans le cadre d'un fonctionnement en temps réel, avec une action dés le cycle concerné, ou dès le cycle suivant pour corriger la stabilité de fonctionnement :

- avec des réglages "rapides" (dynamique à l'échelle d'un cycle) : phasages d'injection, phasages d'allumage, énergie d'allumage, nombre d'étincelle, ...etc.

- et avec des réglages "lents" (dynamique à l'échelle de plusieurs cycles) : taux d'EGR, pression d'admission, pression d'injection du carburant, ...

Le procédé de détection des combustions instables, dans le cadre d'un moteur à allumage commandé fonctionnant en mode stratifié, peut également être utilisé de la façon suivante :

On utilise les indicateurs de stabilité pour caractériser certains points de fonctionnement critiques du moteur, dès la phase de développement au banc moteur. On obtient une cartographie plus ou moins régulière de la zone. Cette cartographie permet de renseigner le calculateur moteur sur une valeur moyenne de l'indicateur de stabilité ($\mu$) et sur une variation acceptable ($\sigma$) de cette grandeur autour de la moyenne. Cette variation peut être composée de deux valeurs, différenciant une variation positive d'une variation négative.

Ce procédé peut également être auto adaptatif et mettre à jour les valeurs de moyenne et de dispersion acceptables, tout au long de la vie du véhicule (cela permet par exemple de détecter d'éventuels problèmes d'encrassement des vannes EGR, des bougies ou même des injecteurs).

Le procédé a été illustré en utilisant la PMI comme indicateur de stabilité. Mais d'autres indicateurs tels que le CA10, la pression cylindre maximale, le couple et les régimes instantanés ou le dégagement d'énergie peuvent être utilisés. De plus, l'invention n'est pas limitée à l'utilisation d'un seul indicateur de stabilité. En effet, il peut être avantageux de combiner plusieurs indicateurs à la fois, en utilisant un seuil multicritères, ou un seuil pour chaque indicateur.

**Revendications**

1. Procédé de contrôle de la combustion d'un moteur à combustion interne à allumage commandé fonctionnant en mode stratifié, dans lequel on détecte une instabilité de combustion dans une chambre de combustion (14) d'au moins un cylindre (12) dudit moteur, dans lequel on enregistre un signal représentatif d'un état de la combustion au moyen d'un capteur placé dans le moteur, et on déduit dudit signal au moins un indicateur de la stabilité de la combustion à chaque cycle moteur, **caractérisé en ce que,** pour chaque cycle moteur :

   - on détermine au moins un paramètre caractérisant une distribution de N valeurs d'indicateurs de la stabilité de la combustion acquises sur N cycles précédant le cycle en cours, en s'affranchissant, parmi lesdites N valeurs, de valeurs extrêmes ;
   - on définit au moins un seuil pour ledit indicateur au moyen desdits paramètres caractérisant ladite distribution ;
   - on détecte une instabilité de la combustion à chaque cycle en comparant l'indicateur de la combustion avec ledit seuil, puis on détermine une fréquence d'apparition d'instabilité au cours de plusieurs cycles, et l'on contrôle le déroulement de la combustion lorsque ladite fréquence est supérieure à un seuil donné.

2. Procédé selon la revendication 1, dans lequel ledit signal est une mesure continue de pression au sein dudit cylindre, et ledit indicateur est choisi parmi les indicateurs suivants : la pression moyenne indiquée, l'angle CA10, la pression cylindre maximale, le couple et les régimes instantanés, et le dégagement d'énergie.

3. Procédé selon l'une des revendications 1 à 2, dans lequel on détermine ledit paramètre caractérisant ladite distribution au moyen d'un estimateur robuste.

4. Procédé selon la revendication 3, dans lequel on choisit ledit estimateur robuste parmi l'un des estimateurs robustes suivants : la moyenne réduite, la médiane, un estimateur m issu d'une minimisation de la fonction f suivante :

$$f(V,m) = (|V(1) - m|)^a + ... + (|V(N) - m|)^a,$$

où $a$ est un nombre réel compris entre 0 et 2, et V(1).... V(N) sont les N valeurs d'indicateurs de la combustion.

5. Procédé selon l'une des revendications 1 à 2, dans lequel on détermine ledit paramètre caractérisant ladite distribution à partir d'une modélisation de ladite distribution, en appliquant les étapes suivantes

     a- on retire X valeurs d'indicateurs parmi les N valeurs de la distribution à modéliser ;
     b- on modélise la distribution des valeurs d'indicateurs restantes, en choisissant une loi de distribution expérimentale a priori ;
     c- on calcule un critère de qualité de la modélisation ;
     d- si ledit critère indique une qualité de modélisation insuffisante, on retire encore des valeurs d'indicateur, parmi les N-X valeurs restantes, et on réitère à l'étape b.

6. Procédé selon la revendication 5, dans lequel le critère de qualité de la modélisation correspond à une somme d'écarts quadratiques entre la distribution expérimentale a priori et la distribution modélisée, ou à une somme d'écarts absolus entre la distribution expérimentale a priori et la distribution modélisée.

7. Procédé selon l'une des revendications précédentes, dans lequel on détermine le seuil en définissant une tolérance sur ledit paramètre caractérisant ladite distribution.

8. Procédé selon la revendication 7, dans lequel ledit seuil correspond à une somme de la moyenne réduite des N valeurs d'indicateurs et de k fois l'écart type desdites N valeurs, $k$ étant un réel positif ou négatif.

9. Procédé selon l'une des revendications précédentes, dans lequel on détermine plusieurs indicateurs de la combustion, et pour chacun d'eux on détermine au moins un seuil.

**Fig. 1**

**Fig. 2**

**Fig. 3**

Fig. 4A

Fig. 4B

Fig. 4C

Europäisches
Patentamt

European
Patent Office

Office européen
des brevets

# RAPPORT DE RECHERCHE EUROPEENNE

Numéro de la demande

EP 09 29 0728

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | DE 198 27 105 A1 (BOSCH GMBH ROBERT [DE]) 23 décembre 1999 (1999-12-23) * colonne 2, ligne 16 - colonne 3, ligne 5 * * alinéas [0006] - [0007], [0 40] - [0084], [0 94] - [0107] * | 1-4,7-9 | INV. G01M15/11 F02D41/14 |
| Y | FR 2 851 612 A1 (SIEMENS VDO AUTOMOTIVE [FR]) 27 août 2004 (2004-08-27) * page 4, ligne 1 - page 6, ligne 22 * * page 7, ligne 1 - page 11, ligne 23 * | 1-4,7-9 | |
| Y | DE 10 2006 016484 A1 (DAIMLER CHRYSLER AG [DE]) 11 octobre 2007 (2007-10-11) * alinéa [0042]; figure 2 * | 2 | |
| A | US 2004/211249 A1 (KIYOMURA AKIRA [JP] ET AL) 28 octobre 2004 (2004-10-28) * alinéas [0006] - [0007], [0 40] - [0084], [0094] - [0107]; figures 2,3,5,6 * | 1-4,8 | |
| A | US 2006/089782 A1 (GALTIER FREDERIC [FR] ET AL) 27 avril 2006 (2006-04-27) * alinéas [0007] - [0017], [0023] - [0034] * | 1,3-4,7 | DOMAINES TECHNIQUES RECHERCHES (IPC)  G01M F02D |
| A | US 2005/056086 A1 (LEE ANSON [US] ET AL) 17 mars 2005 (2005-03-17) * alinéas [0004] - [0005], [0 24] - [0046] * | 1-9 | |
| A | US 6 292 738 B1 (FELDKAMP TIMOTHY MARK [US] ET AL) 18 septembre 2001 (2001-09-18) * le document en entier * | 1-9 | |

-/--

Le présent rapport a été établi pour toutes les revendications

| Lieu de la recherche | Date d'achèvement de la recherche | Examinateur |
|---|---|---|
| La Haye | 4 février 2010 | Libeaut, Laurent |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 09 29 0728

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 5 278 760 A (RIBBENS WILLIAM R [US] ET AL) 11 janvier 1994 (1994-01-11) * colonne 7, ligne 1 - colonne 9, ligne 56 * <br> * colonne 12, ligne 35 - colonne 16, ligne 52 * <br> ----- | 1-9 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 4 février 2010 | Libeaut, Laurent |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 29 0728

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-02-2010

| Document brevet cité au rapport de recherche | | Date de publication | Membre(s) de la famille de brevet(s) | | Date de publication |
|---|---|---|---|---|---|
| DE 19827105 | A1 | 23-12-1999 | AUCUN | | |
| FR 2851612 | A1 | 27-08-2004 | EP | 1595066 A1 | 16-11-2005 |
| | | | WO | 2004074662 A1 | 02-09-2004 |
| | | | JP | 4340284 B2 | 07-10-2009 |
| | | | JP | 2006518435 T | 10-08-2006 |
| | | | KR | 20050103949 A | 01-11-2005 |
| | | | US | 2006074543 A1 | 06-04-2006 |
| DE 102006016484 | A1 | 11-10-2007 | AUCUN | | |
| US 2004211249 | A1 | 28-10-2004 | CN | 1540305 A | 27-10-2004 |
| | | | DE | 102004019897 A1 | 25-11-2004 |
| | | | JP | 4163041 B2 | 08-10-2008 |
| | | | JP | 2004324525 A | 18-11-2004 |
| US 2006089782 | A1 | 27-04-2006 | WO | 2004046678 A1 | 03-06-2004 |
| | | | DE | 10254479 A1 | 09-06-2004 |
| | | | EP | 1563272 A1 | 17-08-2005 |
| US 2005056086 | A1 | 17-03-2005 | AUCUN | | |
| US 6292738 | B1 | 18-09-2001 | AUCUN | | |
| US 5278760 | A | 11-01-1994 | US | 5487008 A | 23-01-1996 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G., SAPORTA.** Probabilité analyse des données et statistique. Editions Technip, 1990, 311-313